# EUROPÄISCHE PATENTSCHRIFT

(11) **EP 3 406 934 B1**
(45) Veröffentlichungstag und Bekanntmachung des Hinweises auf die Patenterteilung: **26.02.2020**
(21) Anmeldenummer: 18184113.1
(22) Anmeldetag: 27.02.2015
(51) Int. Cl.: F16H 3/00, F16H 3/097, F16H 37/04, F16H 3/091, F16H 3/095, B60K 17/28

(54) **DOPPELKUPPLUNGSGETRIEBE, INSBESONDERE FÜR EIN NUTZFAHRZEUG**
DUAL CLUTCH TRANSMISSION, IN PARTICULAR FOR A COMMERCIAL VEHICLE
BOÎTE DE VITESSES À DOUBLE EMBRAYAGE, EN PARTICULIER POUR UN VÉHICULE UTILITAIRE

(30) Priorität: 06.03.2014 DE 102014003391
(43) Veröffentlichungstag der Anmeldung: 28.11.2018
(62) Teilanmeldung aus: 15000568.4
(73) Patentinhaber: MAN Truck & Bus SE, 80995 München (DE)
(72) Erfinder: Tenberge, Peter, 44797 Bochum (DE); Kupka, Daniel Andreas, 46240 Bottrop (DE); Döbereiner, Rolf, 8020 Graz (AT); Zieglmaier, Wolfgang, 85540 Haar (DE); Zoth, Daniel, 81543 München (DE)
(74) Vertreter: v. Bezold & Partner Patentanwälte - PartG mbB

(56) Entgegenhaltungen:
- DE-A1-102005 033 027
- DE-A1-102006 015 661
- DE-A1-102010 002 724
- DE-A1-102010 003 924
- DE-A1-102012 213 706
- DE-A1-102012 213 711

## Beschreibung

Die Erfindung betrifft ein Doppelkupplungsgetriebe, insbesondere für ein Nutzfahrzeug, z. B. einen Lastkraftwagen.

Aus der WO 2011/123019 A1 ist ein Doppelkupplungsgetriebe bekannt, das eine Doppelkupplung, ein Grundgetriebe und eine Rangestufe umfasst. Zur Gangschaltung erfordert das Doppelkupplungsgetriebe eine Vielzahl von Schaltelementen, die einerseits auf einem zentralen Wellenstrang und andererseits auf Vorgelegewellen sitzen. Nachteilig an dem Doppelkupplungsgetriebe ist insbesondere, dass es relativ viel Bauraum erfordert und zudem konstruktiv relativ aufwändig ist, insbesondere was die erforderliche Aktuatorik zur Gangschaltung anbelangt.

Die gattungsgemäße DE 10 2012 213706 A1 offenbart ein Doppelkupplungsgetriebe für ein Kraftfahrzeug.

Das Getriebe weist zwei Teilgetriebe auf, wobei jedes Teilgetriebe eine Eingangswelle aufweist, die auf einer Eingangswellenachse auf der Antriebsseite des Getriebes angeordnet ist. Eine Abtriebswelle der zwei Teilgetriebe ist auf einer Abtriebsseite des Getriebes angeordnet.

Eine Aufgabe der Erfindung ist es, ein alternatives und/oder verbessertes Doppelkupplungsgetriebe zu schaffen.

Diese Aufgabe wird mit den Merkmalen des Hauptanspruchs gelöst Vorteilhafte Weiterbildungen sind den Unteransprüchen und der folgenden Beschreibung zu entnehmen.

Erfindungsgemäß wird ein voll lastschaltbares Doppelkupplungsgetriebe geschaffen. Das Doppelkupplungsgetriebe umfasst eine Doppelkupplung, ein insbesondere als Stirnrad-Grundgetriebe ausgeführtes Grundgetriebe und eine vorzugsweise als Planetengetriebe ausgeführte Rangestufe, die zweckmäßig in letztgenannter Reihenfolge in Lastflussrichtung hintereinander angeordnet sind. Das Grundgetriebe wird zweckmäßig einerseits durch die Doppelkupplung und andererseits durch die Rangestufe begrenzt.

Das Doppelkupplungsgetriebe zeichnet sich vor allem dadurch aus, dass sämtliche Schaltelemente zur Gangschaltung und/oder Radstufenschaltung des Grundgetriebes und der Rangestufe im Wesentlichen koaxial zu einem zentralen Wellenstrang angeordnet sind. Dadurch kann ein relativ kompaktes und relativ einfach herzustellendes Doppelkupplungsgetriebe geschaffen werden.

Der zentrale Wellenstrang dient dazu, die Doppelkupplung, die Rangestufe und vorzugsweise das Grundgetriebe zu verbinden.

Die Schaltelemente sind vorzugsweise als Zahnkupplungen ausgeführt.

Erfindungsgemäß weist das Grundgetriebe eine Vorgelegewellenvorrichtung auf. Die Vorgelegewellenvorrichtung kann zweckmäßig als Single-Vorgelegewelle-Ausführungsform mit einer einzigen Vorgelegewelle oder als Dual-Vorgelegewellen-Ausführungsform mit zwei Vorgelegewellen ausgeführt sein. Die Vorgelegewellenvorrichtung ist zweckmäßig mittels Radstufen mit dem zentralen Wellenstrang verbindbar.

Das Grundgetriebe ist somit mit zwei Vorgelegewellen darstellbar, auf die der Leistungsfluss im Grundgetriebe, insbesondere von den Eingangswellen, verzweigbar ist, was Wirkungsgradvorteile bietet, weil Radialkräfte auf die Eingangswellen und die Hauptwelle ausgeglichen werden können und dadurch geringere Lagerverluste auftreten.

Daraus, dass sämtliche Schaltelemente zur Gang- und/oder Radstufenschaltung des Grundgetriebes und der Rangestufe koaxial zum zentralen Wellenstrang angeordnet sind, folgert insbesondere, dass die Vorgelewellenvorrichtung frei von letztgenannten Schaltelementen ist, insbesondere frei von Losrädern, und/oder sämtliche Losräder des Grundgetriebes auf dem zentralen Wellenstrang sitzen.

Es ist möglich, dass der zentrale Wellenstrang eine hohle erste Eingangswelle, eine zumindest abschnittsweise in der hohlen Eingangswelle verlaufende zweite Eingangswelle, eine Hauptwelle und vorzugsweise den Planetenträger der als Planetengetriebe ausgeführten Rangestufe umfasst, die zweckmäßig koaxial zu einander angeordnet sind. Die Hauptwelle erstreckt sich vorzugsweise bis zum Sonnenrad der Rangestufe, wobei das Sonnenrad drehfest mit der Hauptwelle verbunden ist.

Das Grundgetriebe umfasst Radstufen zum drehfesten Verbinden des zentralen Wellenstrangs mit der Vorgelegewellenvorrichtung, vorzugsweise sieben Radstufen.

Es ist möglich, dass die Radstufen zur Verbindung des zentralen Wellenstrangs mit der Vorgelegewellenvorrichtung jeweils ein Festrad auf der Vorgelegewelle bzw. den Vorgelegewellen und ein Losrad auf dem zentralen Wellenstrang umfassen.

Die Schaltelemente können zwei Schaltelemente umfassen, vorzugsweise eine einseitige Zahnkupplung und eine doppelseitige Zahnkupplung, mittels denen die erste Eingangswelle wahlweise über drei Radstufen mit der Vorgelegewellenvorrichtung drehfest in Verbindung bringbar ist.

Die Schaltelemente können ferner ein Schaltelement umfassen, vorzugsweise eine doppelseitige Zahnkupplung, mittels dem die zweite Eingangswelle wahlweise über zwei Radstufen mit der Vorgelegewellenvorrichtung drehfest in Verbindung bringbar ist.

Außerdem können die Schaltelemente ein Schaltelement umfassen, vorzugsweise eine doppelseitige Zahnkupplung, mittels dem wahlweise die Hauptwelle mit der zweiten Eingangswelle oder über eine Radstufe, insbesondere eine Abtriebskonstante für die Rückwärtsgänge, mit der Vorgelegewellenvorrichtung drehfest in Verbindung bringbar ist. Letztgenanntes Schaltelement ist zweckmäßig zwischen der zweiten Eingangswelle einerseits und der Hauptwelle andererseits angeordnet.

Außerdem können die Schaltelemente ein Schaltelement umfassen, vorzugsweise eine doppelseitige Zahnkupplung, mittels dem wahlweise die Hauptwelle über eine Radstufe, insbesondere eine Abtriebskonstante für die Vorwärtsgänge, mit der Vorgelegewellenvorrichtung drehfest in Verbindung bringbar ist oder der Planetenträger der als Planetengetriebe ausgeführten Rangestufe über eine Radstufe, insbesondere eine Abtriebskonstante für die Vorwärtsgänge, mit der Vorgelegewellenvorrichtung drehfest in Verbindung bringbar ist.

Daraus ergibt sich, dass der Leistungsfluss, der von der Vorgelegewellenvorrichtung kommt, über die Abtriebskonstante für die Rückwärtsgänge bzw. die Abtriebskonstante für die Vorwärtsgänge in Richtung Rangegruppe abtreibbar ist.

Die Schaltelemente können ferner ein Schaltelement umfassen, vorzugsweise eine doppelseitige Zahnkupplung, mittels dem wahlweise ein Hohlrad der als Planetengetriebe ausgeführten Rangestufe mit einem Planetenträger der Rangestufe drehfest in Verbindung bringbar ist oder das Hohlrad der Rangestufe mit dem Getriebegehäuse drehfest in Verbindung bringbar ist. Letztgenanntes Schaltelement sitzt vorzugweise auf dem Planetenträger, der im Rahmen der Erfindung zweckmäßig dem zentralen Wellenstrang zugeordnet werden kann. Es kann allerdings auch dem Planetenträger vorgelagert sein.

Das Grundgetriebe und die Rangestufe umfassen zusammen vorzugsweise insgesamt sechs Schaltelemente.

Erfindungsgemäß ist das in Lastflussrichtung erste Schaltelement des Grundgetriebes als einseitiges Schaltelement ausgeführt, während die in Lastflussrichtung nachgelagerten, vorzugsweise fünf, Schaltelemente als doppelseitige Schaltelemente ausgeführt sind.

Die Hauptwelle ist zweckmäßig mit dem Sonnenrad der als Planetengetriebe ausgeführten Rangestufe fest drehfest verbunden. Alternativ oder ergänzend kann der Getriebeabtrieb mit dem Planetenträger der Rangestufe zweckmäßig fest drehfest verbunden sein.

Wie schon zuvor erwähnt, kann die Vorgelegewellenvorrichtung zwei separate Vorgelegewellen umfassen, die zur Leistungsverzweigung von der ersten Eingangswelle und der zweiten Eingangswelle dienen. Die zwei separaten Vorgelegewellen erstrecken sich zweckmäßig nicht-koaxial zueinander und/oder sind um vorzugsweise im Wesentlichen 180° (z. B. +/- 10° oder +/- 5°) gespiegelt angeordnet. Dadurch kann insbesondere ein Radialkraftausgleich und eine Wirkungsgraderhöhung ermöglicht werden.

Zumindest eine der Vorgelegewellen ist vorzugsweise so ausgeführt, dass daran ein Nebenabtrieb (PTO, Power take-off) montierbar ist.

Das Doppelkupplungsgetriebe ist ein voll lastschaltbares Doppelkupplungsgetriebe. "Voll lastschaltbar" meint insbesondere, dass für jeden Gang, der im Leistungsfluss liegt, die Möglichkeit besteht, zumindest einen Gang darüber und/oder zumindest einen Gang darunter auf einem lastfreien Pfad auf der offenen Kupplung der Doppelkupplung voreinzulegen, so dass zweckmäßig über eine Überschneidungsschaltung der Doppelkupplung die Lastschaltbarkeit durchgeführt werden kann.

Das Grundgetriebe und die Rangestufe sind vorzugsweise lastschaltbar ausgeführt, zweckmäßig mittels einer Überschneidungsschaltung der Doppelkupplung.

Um die Lastschaltbarkeit zu ermöglichen, umfasst das Grundgetriebe vorzugsweise zwei separate Lastpfade und die Rangstufe zwei separate Lastpfade. Dadurch können das Grundgetriebe und die Rangestufe lastschaltbar ausgeführt werden, insbesondere voll lastschaltbar, um zweckmäßig sämtliche Vorwärtsgänge des Grundgetriebes und sämtliche Vorwärtsgänge der Rangestufe und somit zweckmäßig sämtliche Vorwärtsgänge des Doppelkupplungsgetriebes lastschaltbar darstellen zu können.

Das Doppelkupplungsgetriebe umfasst zwölf Vorwärtsgänge im Direktgang-Modus und/oder dreizehn Vorwärtsgänge im Overdrive-Modus.

Die Umschaltbarkeit zwischen dem Direktgang-Modus und dem Overdrive-Modus kann vorzugsweise durch eine Überschneidungsschaltung der Doppelkupplung ermöglicht werden. Das Doppelkupplungsgetriebe umfasst vorzugsweise fünf zweckmäßig geometrisch gestufte Rückwärtsgänge.

Zu erwähnen ist noch, dass die Rangestufe insbesondere als 3-Wellen-Planetengetriebe ausgeführt sein kann.

Zu erwähnen ist ferner, dass die Kupplungen der Doppelkupplung trocken- oder nasslaufend ausgeführt sein können, radial oder axial angeordnet sein können und/oder federkraftgeschlossen ("normally closed") oder federkraft-geöffnet ("normally open") ausgeführt sein können.

Zu erwähnen ist außerdem, dass im Rahmen der Erfindung das Doppelkupplungsgetriebe Gangschaltelemente außerhalb des Grundgetriebes und der Rangestufe aufweisen kann (z. B. in der Doppelkupplung).

Zu erwähnen ist darüber hinaus, dass der zentrale Wellenstrang, insbesondere die Eingangswellen und die Hauptwelle, und die Vorgelegewelle bzw. die Vorgelegewellen parallel zueinander verlaufen.

Die Erfindung ist nicht auf ein Doppelkupplungsgetriebe beschränkt, sondern umfasst auch ein Nutzfahrzeug, vorzugsweise einen Lastkraftwagen oder einen Omnibus, mit einem Doppelkupplungsgetriebe wie hierin beschrieben.

Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
- Figur 1: zeigt ein Doppelkupplungsgetriebe gemäß einer Ausführungsform der Erfin-dung,
- Figuren 2-14: zeigen Lastflüsse der einzelnen Gänge des Doppelkupplungsgetriebes der Figur 1,
- Figur 15: zeigt eine Schalttabelle des Doppelkupplungsgetriebes der Figur 1, und
- Figur 16: zeigt ein Doppelkupplungsgetriebe gemäß einer anderen Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung der anderen Figuren verwiesen wird, um Wiederholungen zu vermeiden.

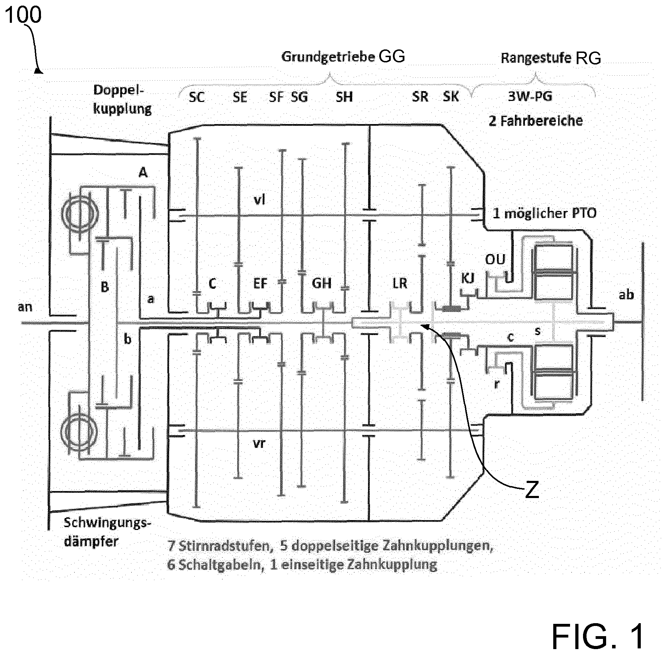

Figur 1 zeigt ein Doppelkupplungsgetriebe 100 für Nutzfahrzeuge, insbesondere sogenannte schwere Lastkraftwagen.

Das Doppelkupplungsgetriebe 100 ist als voll lastschaltbares Doppelkupplungsgetriebe ausgeführt und umfasst eine Doppelkupplung mit zwei Kupplungen A, B, ein lastschaltbares Stirnrad-Grundgetriebe GG und eine ein Planetengetriebe umfassende, lastschaltbare Rangestufe RG. Das Planetengetriebe ist als dreiwelliges Planetengetriebe ausgeführt und umfasst ein Hohlrad r, einen Planetenträger (Steg) c und eine Sonnenradwelle, die einen Teil einer Hauptwelle s darstellt und fest drehfest mit dem Sonnenrad des Planetengetriebes verbunden ist. Ein zentraler Wellenstrang Z verbindet die Doppelkupplung A, B, das Grundgetriebe GG und die Rangestufe RG.

Das Grundgetriebe GG umfasst eine Vorgelegewellenvorrichtung, die zwei separate Vorgelegewellen vl, vr aufweist. Die zwei Vorgelegewellen vl, vr dienen zur Leistungsverzweigung und erstrecken sich nicht-koaxial zueinander. Sie sind um im Wesentlichen 180° gespiegelt angeordnet, um so einen Radialkraftausgleich und in der Folge eine Wirkungsgraderhöhung zu ermöglichen.

Das Grundgetriebe GG umfasst sieben Radstufen, insbesondere Stirnradstufen, SC, SE, SF, SG, SH, SR, SK. Die Radstufen SC, SE, SF, SG, SH, SR, SK umfassen jeweils ein Festrad auf den Vorgelegewellen vl, vr und ein Losrad auf dem zentralen Wellenstrang Z. Die Radstufen SC, SE, SF, SG, SH, SR, SK dienen zum drehfesten Verbinden der Vorgelegewellen vl, vr mit dem zentralen Wellenstrang Z.

Das Grundgetriebe GG und die Rangestufe RG umfassen zusammen insgesamt sechs als Zahnkupplungen ausgeführte Schaltelemente C, EF, GH, LR, KJ, OU zur Gang- und/oder Radstufenschaltung.

Das in Lastflussrichtung erste Schaltelement C ist als einseitiges Schaltelement ausgeführt, während die verbleibenden, nachgeordneten fünf Schaltelemente EF, GH, LR, KJ, OU als doppelseitige Schaltelemente ausgeführt sind.

Der zentrale Wellenstrang Z umfasst eine hohle erste Eingangswelle a, eine die hohle Eingangswelle a durchdringende zweite Eingangswelle b und die Hauptwelle s. Ebenso kann zweckmäßig der Planetenträger c dem zentralen Wellenstrang Z zugeordnet werden. Die erste Eingangswelle a ist mit der Kupplung A fest drehfest verbunden, wobei die zweite Eingangswelle b mit der Kupplung B fest drehfest verbunden ist. Die Hauptwelle s erstreckt sich innerhalb der Rangestufe RG und insbesondere durch den Planetenträger c. Die erste Eingangswelle a, die zweite Eingangswelle b, die Hauptwelle s und vorzugsweise der Planetenträger c sind koaxial angeordnet.

Sämtliche Schaltelemente C, EF, GH, LR, KJ, OU, insbesondere die Synchronisierungen, die im Grundgetriebe GG und in der Rangestufe RG angeordnet sind, sind koaxial zu dem zentralen Wellenstrang Z angeordnet. Daraus folgt, dass die Schaltelemente C, EF, GH, LR, KJ, OU auf dem die erste Eingangswelle a, die zweite Eingangswelle b, die Hauptwelle s und zweckmäßig den Planetenträger c umfassenden Wellenstrang Z sitzen.

Die zwei Vorgelegewellen vl, vr umfassen zwar die Festräder der Radstufen SC, SE, SF, SG, SH, SR, SK, sind aber frei von Gang- und/oder Radstufen-Schaltelementen und frei von Losrädern. Sämtliche Losräder der Radstufen SC, SE, SF, SG, SH, SR, SK sitzen auf dem zentralen Wellenstrang Z.

Mittels der Schaltelemente C, EF ist die erste Eingangswelle a wahlweise über die drei Radstufen SC, SE, SF mit den Vorgelegewellen vl, vr drehfest in Verbindung bringbar. Radstufe SC dient dem 1. und 7. Gang und verbindet die erste Eingangswelle a mit den Vorgelegewellen vl, vr. Radstufe SE dient dem 5. und 11. Gang und verbindet die erste Eingangswelle a mit den Vorgelegewellen vl, vr. Radstufe SF dient dem 3. und 9. Gang und verbindet die erste Eingangswelle a mit den Vorgelegewellen vl, vr.

Mittels des Schaltelements GH kann die zweite Eingangswelle b wahlweise über die Radstufen SG, SH mit den Vorgelegewellen vl, vr drehfest in Verbindung gebracht werden. Radstufe SG dient dem 4. und 10. Gang und verbindet die zweite Eingangswelle b mit den Vorgelegewellen vl, vr. Radstufe SH dient dem 2. und 8. Gang und verbindet die zweite Eingangswelle b mit den Vorgelegewellen vl, vr.

Mittels des Schaltelements LR kann die Hauptwelle s wahlweise mit der zweiten Eingangswelle b oder über die Radstufe SR mit den Vorgelegenwellen vl, vr drehfest in Verbindung gebracht werden. Die Radstufe SR stellt eine Abtriebskonstante für die Rückwärtsgänge dar und dient dazu, die Vorgelegewellen vl, vr über ein zusätzliches Rückwärtsgangsrad mit der Hauptwelle s zu verbinden. Das Schaltelement LR ist zwischen der zweiten Eingangswelle b und der Hauptwelle s angeordnet.

Mittels des Schaltelements KJ kann die Hauptwelle s wahlweise über die Radstufe SK mit den Vorgelegenwellen vl, vr drehfest in Verbindung gebracht werden oder kann der Planetenträger c der Rangestufe RG über die Radstufe SK mit den Vorgelegewellen vl, vr drehfest in Verbindung gebracht werden. Die Radstufe SK stellt eine Abtriebskonstante für die Vorwärtsgänge dar und dient dazu, die Vorgelegewellen vl, vr wahlweise mit der Hauptwelle s oder dem Planetenträger c zu verbinden (umzuschalten über Schaltelement KJ).

Konstantstufen zeichnen sich dadurch aus, dass sie über mehrere Gänge konstant im Leistungsfluss bleiben und nicht nur für einen bestimmten Gang eingelegt werden.

Mittels den Radstufen SC, SE, SF, SG, SH und den zugehörigen Schaltelementen C, EF, GH ist eine Übertragung des Leistungsflusses von den Eingangswellen a, b auf die beiden Vorgelegewellen vl, vr und somit die zuvor erwähnte Leistungsverzweigung möglich. Dadurch können Radialkräfte auf die Eingangswellen a, b und die Hauptwelle s ausgeglichen werden und somit geringere Lagerverluste erzielt werden. Über die Abtriebskonstante SR für die Rückwärtsgänge und die Abtriebskonstante SK für die Vorwärtsgänge ist der Leistungsfluss von den zwei Vorgelegewellen vl, vr auf die Rangestufe RG, insbesondere die Hauptwelle s oder den Planetenträger c (bei Abtriebskonstante SK), übertragbar.

Mittels des Schaltelements OU kann wahlweise das Hohlrad r mit dem Planetenträger c drehfest in Verbindung gebracht werden oder kann das Hohlrad r mit dem Getriebegehäuse drehfest in Verbindung gebracht werden.

Das Sonnenrad der Rangestufe RG ist fest drehfest mit der Hauptwelle s verbunden, während der Planetenträger c fest drehfest mit dem Getriebeabtrieb ab verbunden ist.

Die Rangestufe RG ist als dreiwellige Planetenradstufe mit 2 Fahrbereichen ausgeführt, nämlich einem ersten Fahrbereich und einem zweiten Fahrbereich.

In dem ersten Fahrbereich geht der Leistungsfluss in der Rangestufe RG von der Hauptwelle s zum Planetenträger c, der fest mit dem Getriebeabtrieb ab verbunden ist, wobei das Hohlrad r über das Schaltelement OU (Schaltstellung U) mit dem Getriebegehäuse verbunden ist.

In dem zweiten Fahrbereich geht der Leistungsfluss in der Rangestufe RG in den meisten Gängen über das Schaltelement KJ (Schaltstellung J) direkt auf den Planetenträger c, woraufhin das Hohlrad r über das Schaltelement OU (Schaltstellung O) mit dem Planetenträger c verbindbar ist. Im Direktgang wird die zweite Eingangswelle b mittels des Schaltelements LR (Schaltstellung L) mit der Hauptwelle s verbunden und somit über den mit dem Hohlrad r verbundenen Planetenträger c auch mit dem Getriebeabtrieb ab.

Das Doppelkupplungsgetriebe 100 umfasst zusätzlich zu zwölf (Direktgang-Modus) bzw. dreizehn (Overdrive-Modus) Vorwärtsgängen fünf Rückwärtsgänge.

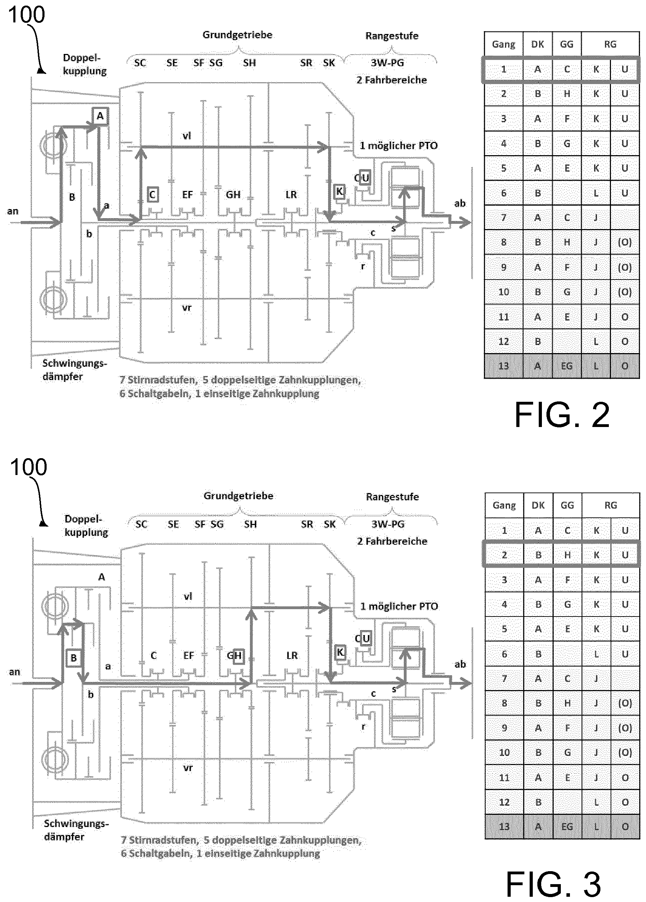

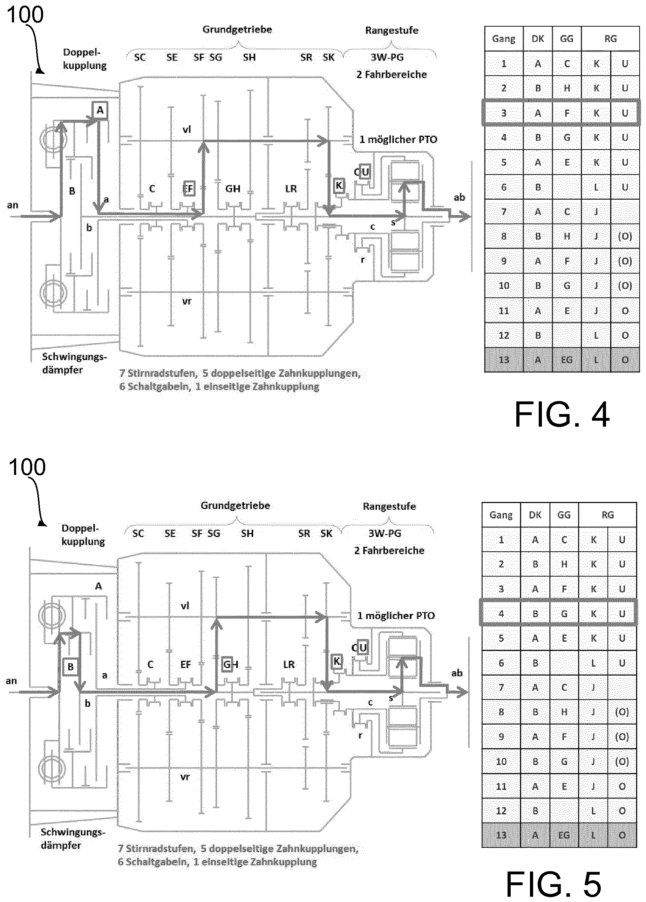

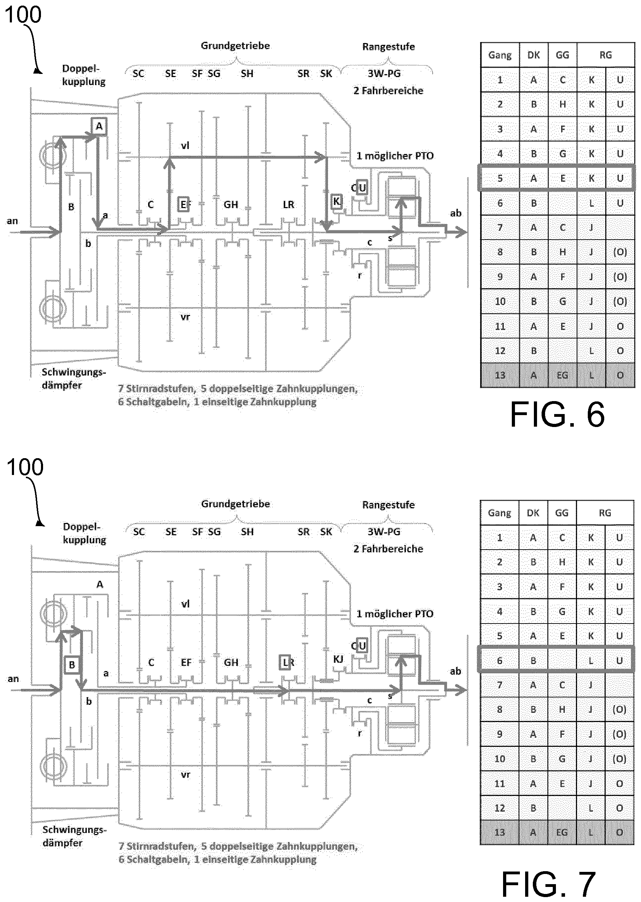

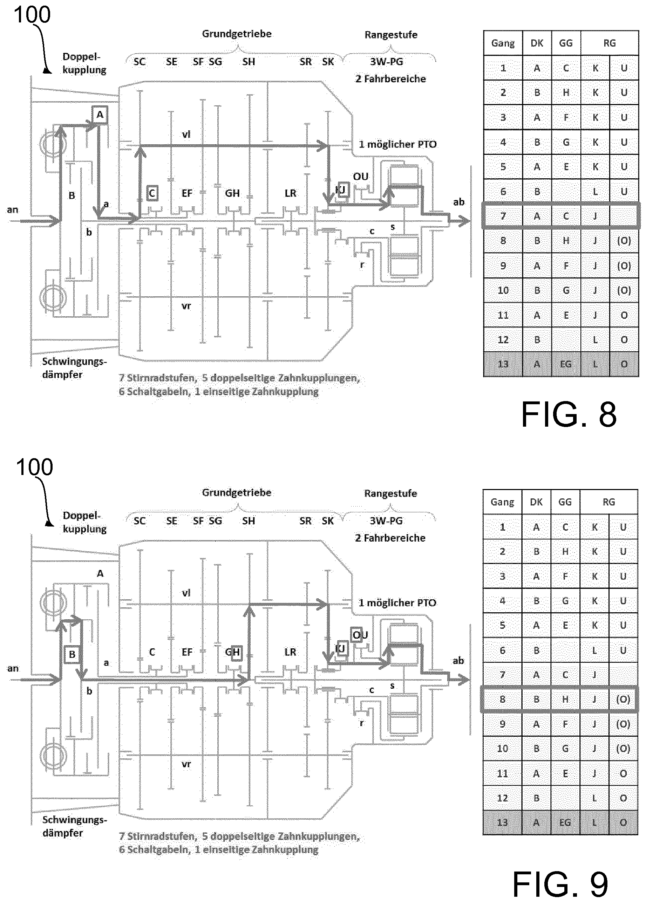

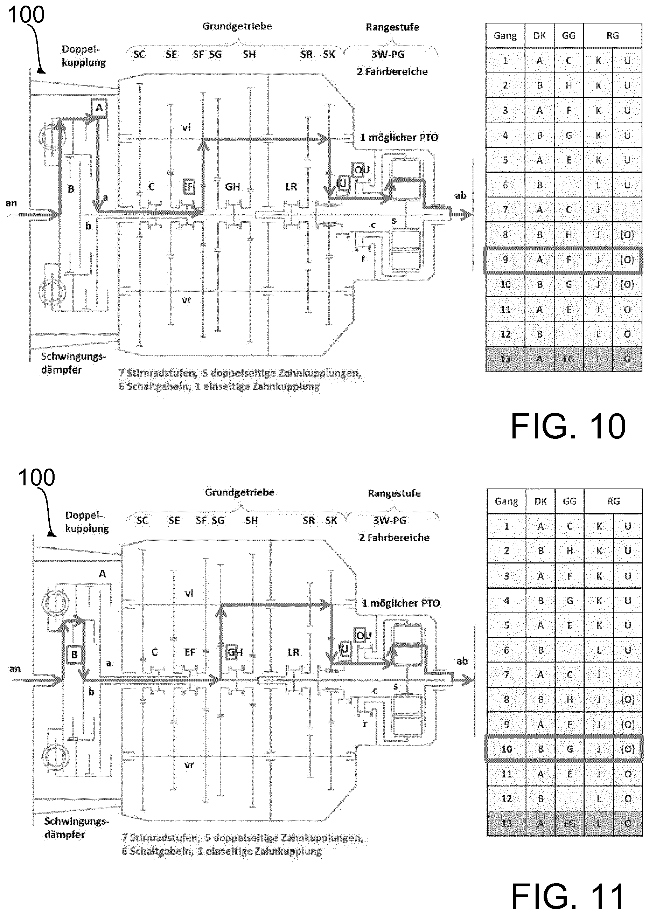

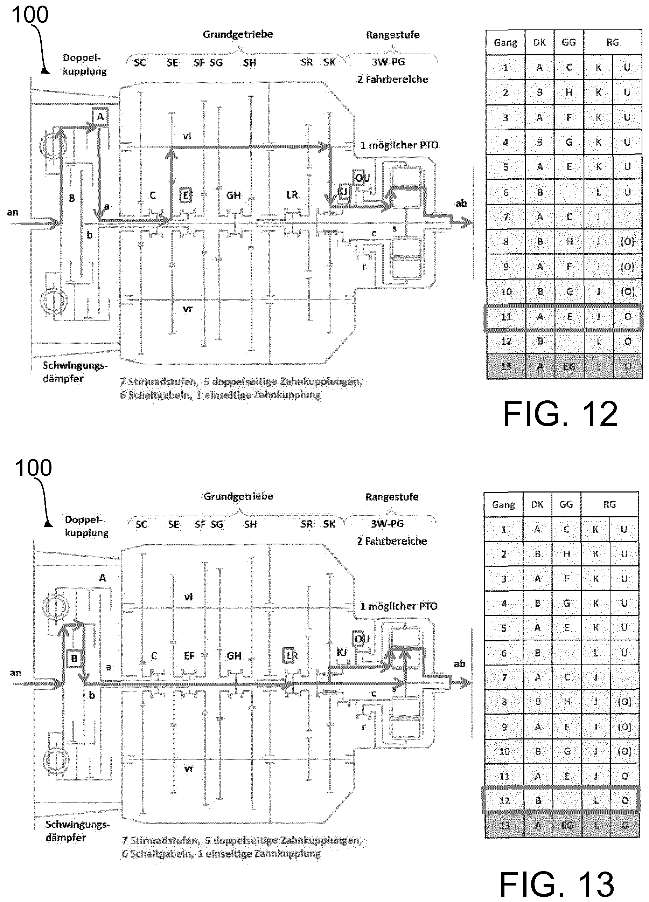

Die Figuren 2-14 zeigen die Lastflüsse der einzelnen Vorwärtsgänge des Doppelkupplungsgetriebes 100.

Den Figuren 2-14 kann mitunter folgende Betriebsweise des Doppelkupplungsgetriebes 100 entnommen werden:
Im unteren Fahrbereich ("kleine Gruppe", Gänge 1-6) wird die Rangestufe RG über das Sonnenrad von der Hauptwelle s angetrieben, der Abtrieb erfolgt über den Planetenträger c. Das Hohlrad r ist über das Schaltelement OU (Schaltstellung U) drehfest mit dem Getriebegehäuse verbunden.

Im oberen Fahrbereich ("große Gruppe", Gänge 12-13) wird die Rangestufe RG über das Sonnenrad von der Hauptwelle s angetrieben, der Abtrieb erfolgt über den Planetenträger c. Das Hohlrad r ist über das Schaltelement OU (Schaltstellung O) drehfest mit dem Planetenträger c verbunden, so dass das Planetengetriebe als Block umläuft. Der obere Fahrbereich umfasst die Gänge 7-11, in dem die Leistung von der Abtriebskonstanten für die Vorwärtsgänge SK direkt über den Planetenträger c auf den Getriebeabtrieb ab übertragen wird. In den Gängen 7-11 muss die Rangestufe RG nicht zwangsläufig als Block umlaufen. Die Gänge 7-11 sind aufgrund der Übersetzung der Rangestufe RG (i = 1,0 wie bei Blockumlauf) trotzdem der "großen Gruppe" zuordbar.

Zur Umschaltung der Rangestufe RG sind die Schaltelemente KJ, OU erforderlich. Das Schaltelement KJ ermöglicht die drehfeste Verbindung der Abtriebskonstante SK für die Vorwärtsgänge mit der Hauptwelle s oder direkt dem Planetenträger c. Das Schaltelement OU erlaubt die drehfeste Verbindung des Hohlrades r mit dem Getriebegehäuse oder dem Planetenträger c.

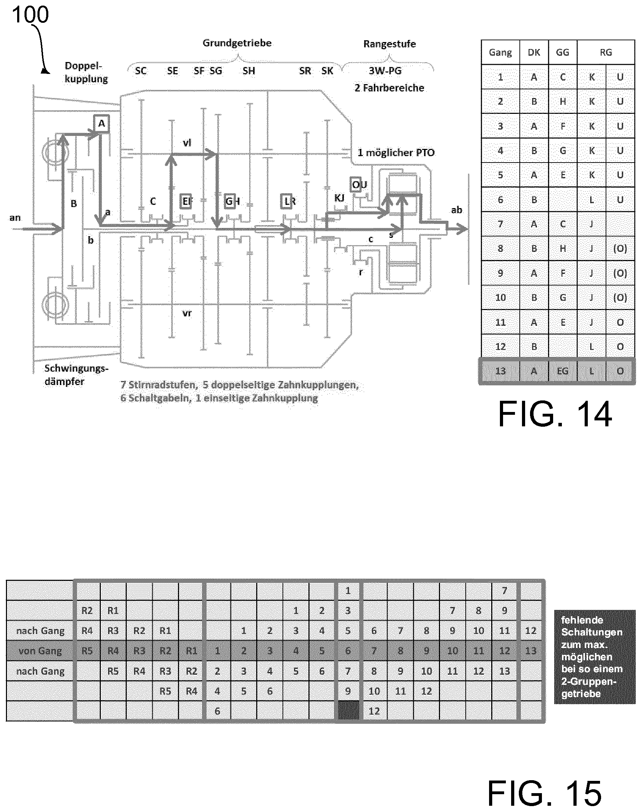

Figur 15 zeigt eine Schalttabelle des Doppelkupplungsgetriebes 100 der Figur 1.

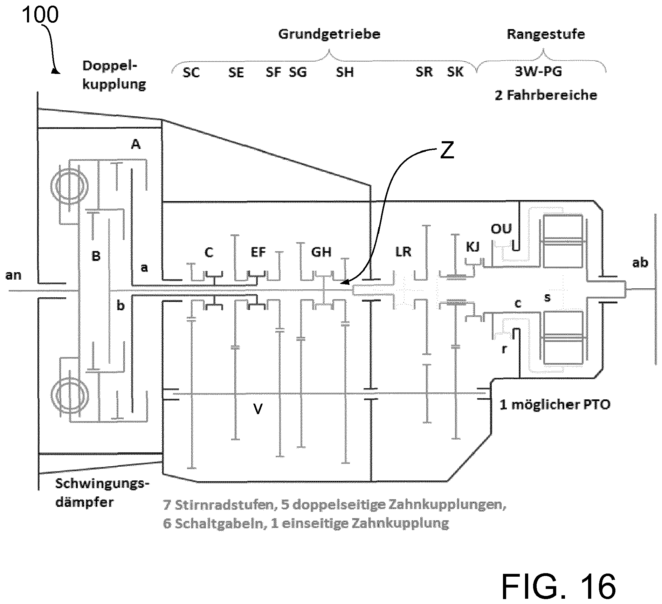

Figur 16 zeigt ein Doppelkupplungsgetriebe 100 gemäß einer anderen Ausführungsform der Erfindung.

Eine Besonderheit des in Figur 16 gezeigten Doppelkupplungsgetriebes 100 ist, dass es nicht zwei Vorgelegewellen aufweist, sondern nur eine einzige Vorgelegewelle v. Ansonsten kann das Doppelkupplungsgetriebe 100 der Figur 16 im Wesentlichen gleich ausgeführt werden wie das Doppelkupplungsgetriebe 100 der Figur 1. Für das Doppelkupplungsgetriebe 100 der Figur 16 gilt ebenso, dass alle Schaltelemente C, EF, GH, LR, KJ, OU bzw. alle Losräder der Radstufen SC, SE, SF, SG, SH, SR, SK koaxial zum zentralen Wellenstrang Z (Eingangswellen a, b, Hauptwelle s und vorzugsweise Planetenträger c) angeordnet sind und die Vorgelegewelle v frei von Schaltelementen und frei von Losrädern ist.

### Bezugszeichenliste

- an: Getriebeantriebswelle
- A: Kupplung für hohle Eingangswelle
- B: Kupplung für volle Eingangswelle
- a: Hohle Eingangswelle
- b: Volle Eingangswelle
- C: Schaltelement, das Radstufe SC mit hohler Eingangswelle verbindet
- E: Schaltelement, das Radstufe SE mit hohler Eingangswelle verbindet
- F: Schaltelement, das Radstufe SF mit hohler Eingangswelle verbindet
- G: Schaltelement, das Radstufe SG mit voller Eingangswelle verbindet
- H: Schaltelement, das Radstufe SH mit voller Eingangswelle verbindet
- L: Schaltelement, das die volle Eingangswelle mit der Hauptwelle verbindet
- R: Schaltelement, das die Abtriebskonstante für den Rückwärtsgang (SR) mit der Hauptwelle verbindet
- K: Schaltelement, das die Abtriebskonstante für den Vorwärtsgang (SK) mit der Hauptwelle verbindet
- J: Schaltelement, das die Abtriebskonstante für den Vorwärtsgang (SK) mit dem Planetenträger verbindet
- O: Schaltelement, das das Hohlrad mit dem Planetenträger verbindet
- U: Schaltelement, das das Hohlrad mit dem Getriebegehäuse verbindet
- SC: Radstufe für den 1. und 7. Gang, welche die hohle Eingangswelle mit der Vorgelegewellenvorrichtung verbindet
- SE: Radstufe für den 5. und 11. Gang, welche die hohle Eingangswelle mit der Vorgelegewellenvorrichtung verbindet
- SF: Radstufe für den 3. und 9. Gang, welche die hohle Eingangswelle mit der Vorgelegewellenvorrichtung verbindet
- SG: Radstufe für den 4. und 10. Gang, welche die volle Eingangswelle mit der Vorgelegewellenvorrichtung verbindet
- SH: Radstufe für den 2. und 8. Gang, welche die volle Eingangswelle mit der Vorgelegewellenvorrichtung verbindet
- SR: Abtriebskonstante für die Rückwärtsgänge (welche insbesondere die Vorgelegewellenvorrichtung über ein zusätzliches Rückwärtsgangrad mit der Hauptwelle verbindet)
- SK: Abtriebskonstante für die Vorwärtsgänge (welche insbesondere die Vorgelegewellenvorrichtung wahlweise mit der Hauptwelle oder dem Planetenträger verbindet (umzuschalten über Schaltelement KJ))
- RG: Rangestufe
- 3W-PG: 3-Wellen-Planetengetriebe
- ab: Abtriebsflansch / Getriebeabtrieb
- vl: Vorlegewelle (links)
- vr: Vorlegewelle (rechts)
- s: Hauptwelle (Sonnenradwelle)
- c: Planetenträger (Steg)
- r: Hohlrad
- PTO: Power Take-Off (Nebenabtrieb)
- 100: Doppelkupplungsgetriebe
- GG: Grundgetriebe
- RG: Rangestufe
- Z: Zentraler Wellenstrang (Eingangswellen, Hauptwelle und vorzugsweise Planetenträger)

## Patentansprüche

1. Voll lastschaltbares Doppelkupplungsgetriebe (100), mit:
- einer Doppelkupplung (A, B),
- einem Grundgetriebe (GG) und
- einer Rangestufe (RG), vorzugsweise ausgeführt als Planetengetriebe,
wobei
- sämtliche Schaltelemente (C, EF, GH, LR, KJ, OU) zur Gang- und/oder Radstufenschaltung des Grundgetriebes (GG) und der Rangestufe (RG) koaxial zu einem die Doppelkupplung (A, B) und die Rangestufe (RG) verbindenden, zentralen Wellenstrang (Z) angeordnet sind,
- das Doppelkupplungsgetriebe (100) 12 Vorwärtsgänge im Direktgang-Modus und/oder 13 Vorwärtsgänge im Overdrive-Modus zur Verfügung stellt, und
- das Grundgetriebe (GG) eine Vorgelegewellenvorrichtung (vl, vr; v) aufweist,
**dadurch gekennzeichnet, dass**
- das in Lastflussrichtung erste Schaltelement (C) des Grundgetriebes (GG) als einseitiges Schaltelement ausgeführt ist und die in Lastflussrichtung nachgelagerten, vorzugsweise fünf, Schaltelemente (EF, GH, LR, KJ, OU) als doppelseitige Schaltelemente ausgeführt sind.

2. Doppelkupplungsgetriebe (100) nach Anspruch 1, **dadurch gekennzeichnet, dass** der zentrale Wellenstrang (Z) eine erste Eingangswelle (a), eine zweite Eingangswelle (b), und eine Hauptwelle (s) umfasst, wobei die erste Eingangswelle (a) hohl ist und die zweite Eingangswelle (b) zumindest abschnittsweise in der ersten Eingangswelle (a) verläuft.

3. Doppelkupplungsgetriebe (100) nach Anspruch 2, **dadurch gekennzeichnet, dass** die Schaltelemente zwei Schaltelemente (C, EF) umfassen, mittels denen die erste Eingangswelle (a) wahlweise über drei Radstufen (SC, SE, SF) mit der Vorgelegewellenvorrichtung (vl, vr; v) drehfest in Verbindung bringbar ist.

4. Doppelkupplungsgetriebe (100) nach einem der Ansprüche 2 bis 3, **dadurch gekennzeichnet, dass** die Schaltelemente ein Schaltelement (GH) umfassen, mittels dem die zweite Eingangswelle (b) wahlweise über zwei Radstufen (SG, SH) mit der Vorgelegewellenvorrichtung (vl, vr; v) drehfest in Verbindung bringbar ist.

5. Doppelkupplungsgetriebe (100) nach einem der Ansprüche 2 bis 4, **dadurch gekennzeichnet, dass** der zentrale Wellenstrang (Z) einen Planetenträger (c) der Rangestufe (RG) umfasst.

6. Doppelkupplungsgetriebe (100) nach Anspruch 5, **dadurch gekennzeichnet, dass** die Schaltelemente ein Schaltelement (KJ) umfassen, mittels dem wahlweise die Hauptwelle (s) über eine Radstufe (SK) mit der Vorgelegewellenvorrichtung (vl, vr; v) drehfest in Verbindung bringbar ist oder der Planetenträger (c) der Rangestufe (RG) über letztgenannte Radstufe (SK) mit der Vorgelegewellenvorrichtung (vl, vr; v) drehfest in Verbindung bringbar ist.

7. Doppelkupplungsgetriebe (100) nach einem der Ansprüche 3, 4 und 6, **dadurch gekennzeichnet, dass** die Radstufen (SC, SE, SF, SG, SH, SR, SK) jeweils ein Festrad auf einer Vorgelegewelle (vl, vr; v) und ein Losrad auf dem zentralen Wellenstrang (Z) umfassen.

8. Doppelkupplungsgetriebe (100) nach einem der Ansprüche 5 und 6, **dadurch gekennzeichnet, dass** die Schaltelemente ein Schaltelement (OU) umfassen, mittels dem wahlweise ein Hohlrad (r) der Rangestufe (RG) mit dem Planetenträger (c) der Rangestufe (RG) drehfest in Verbindung bringbar ist oder das Hohlrad (r) der Rangestufe (RG) mit einem Getriebegehäuse drehfest in Verbindung bringbar ist.

9. Doppelkupplungsgetriebe (100) nach einem der Ansprüche 5, 6 und 8, **dadurch gekennzeichnet, dass** die Hauptwelle (s) mit einem Sonnenrad der Rangestufe (RG) drehfest verbunden ist und ein Getriebeabtrieb mit dem Planetenträger (c) der Rangestufe (RG) drehfest verbunden ist.

10. Doppelkupplungsgetriebe (100) nach einem der Ansprüche 1 bis 9, **dadurch gekennzeichnet, dass** die Vorgelegewellenvorrichtung zwei separate Vorgelegewellen (vl, vr) aufweist, auf die der Leistungsfluss verzweigbar ist.

11. Doppelkupplungsgetriebe (100) nach einem der Ansprüche 1 bis 9, **dadurch gekennzeichnet, dass** die Vorgelegewellenvorrichtung eine einzige Vorgelegewelle (v) aufweist.

12. Doppelkupplungsgetriebe (100) nach einem der Ansprüche 1 bis 11, **dadurch gekennzeichnet, dass** die Vorgelegewellenvorrichtung (vl, vr; v) so ausgeführt ist, dass daran zumindest ein Nebenabtrieb (PTO) anschließbar ist.

13. Doppelkupplungsgetriebe (100) nach einem der vorhergehenden Ansprüche, **dadurch gekennzeichnet, dass** die Lastschaltbarkeit des Grundgetriebes (GG) und der Rangestufe (RG) durch eine Überschneidungsschaltung der Doppelkupplung (A, B) ermöglicht wird.

14. Nutzfahrzeug, insbesondere Lastkraftwagen, mit einem Doppelkupplungsgetriebe (100) nach einem der vorhergehenden Ansprüche.

## Claims

1. Dual clutch transmission (100) which is fully power-shiftable, having:
- a dual clutch (A, B),
- a basic transmission (GG) and
- a range-change stage (RG), preferably embodied as a planetary transmission,
wherein
- all the shift elements (C, EF, GH, LR, KJ, OU) for gear and/or wheel stage shifting of the basic transmission (GG) and of the range-change stage (RG) are arranged coaxially with respect to a central shaft train (Z), which connects the dual clutch (A, B) and the range-change stage (RG),
- the dual clutch transmission (100) makes available 12 forward gears in the direct-gear mode and/or 13 forward gears in the overdrive mode, and
- the basic transmission (GG) has a layshaft assembly (vl, vr; v),
**characterized in that**
- the first shift element (C) of the basic transmission (GG) in the load flow direction is embodied as a one-sided shift element and the subsequent shift elements (EF, GH, LR, KJ, OU), which are downstream in the load flow direction and of which there are preferably five, are embodied as double-sided shift elements.

2. Dual clutch transmission (100) according to Claim 1, **characterized in that** the central shaft train (Z) comprises a first input shaft (a), a second input shaft (b), and a main shaft (s), wherein the first input shaft (a) is hollow and the second input shaft (b) extends at least partially in the first input shaft (a).

3. Dual clutch transmission (100) according to Claim 2, **characterized in that** the shift elements comprise two shift elements (C, EF), by means of which the first input shaft (a) can be connected selectively for conjoint rotation to the layshaft assembly (vl, vr; v) by means of three wheel stages (SC, SE, SF).

4. Dual clutch transmission (100) according to either of Claims 2 and 3, **characterized in that** the shift elements comprise a shift element (GH) by means of which the second input shaft (b) can be connected selectively for conjoint rotation to the layshaft assembly (vl, vr; v) by means of two wheel stages (SG, SH).

5. Dual clutch transmission (100) according to one of Claims 2 to 4, **characterized in that** the central shaft train (Z) comprises a planet carrier (c) of the range-change stage (RG).

6. Dual clutch transmission (100) according to Claim 5, **characterized in that** the shift elements comprise a shift element (KJ) by means of which the main shaft (s) can be connected selectively for conjoint rotation, via a wheel stage (SK), to the layshaft assembly (vl, vr; v), or the planet carrier (c) of the range-change stage (RG) can be connected for conjoint rotation, via said wheel stage (SK), to the layshaft assembly (vl, vr; v).

7. Dual clutch transmission (100) according to one of Claims 3, 4 and 6, **characterized in that** the wheel stages (SC, SE, SF, SG, SH, SR, SK) each comprise a fixed wheel on a layshaft (vl, vr; v) and a freely rotating wheel on the central shaft train (Z).

8. Dual clutch transmission (100) according to either of Claims 5 and 6, **characterized in that** the shift elements comprise a shift element (OU) by means of which an annulus (r) of the range-change stage (RG) can be connected selectively to the planet carrier (c) of the range-change stage (RG) in a manner fixed against rotation relative thereto, or the annulus (r) of the range-change stage (RG) can be connected to a transmission case in a manner fixed against rotation relative thereto.

9. Dual clutch transmission (100) according to one of Claims 5, 6 and 8, **characterized in that** the main shaft (s) is connected for conjoint rotation to a sun wheel of the range-change stage (RG) and a transmission output is connected for conjoint rotation to the planet carrier (c) of the range-change stage (RG).

10. Dual clutch transmission (100) according to one of Claims 1 to 9, **characterized in that** the layshaft assembly has two separate layshafts (vl, vr), between which the power flow can be split.

11. Dual clutch transmission (100) according to one of Claims 1 to 9, **characterized in that** the layshaft assembly has a single layshaft (v).

12. Dual clutch transmission (100) according to one of Claims 1 to 11, **characterized in that** the layshaft assembly (vl, vr; v) is embodied in such a way that at least one power takeoff (PTO) can be connected thereto.

13. Dual clutch transmission (100) according to one of the preceding claims, **characterized in that** the ability of the basic transmission (GG) and of the range-change stage (RG) for power shifting is made possible by an overlapping shift of the dual clutch (A, B).

14. Commercial vehicle, in particular lorry, having a dual clutch transmission (100) according to one of the preceding claims.

## Revendications

1. Boîte de vitesses à double embrayage (100) pouvant changer de rapport à pleine charge, comprenant :
- un double embrayage (A, B),
- un engrenage de base (GG) et
- un étage de catégorie (RG), de préférence réalisé sous la forme d'un engrenage planétaire,
- tous les éléments de changement de rapport (C, EF, GH, LR, KJ, OU) servant au changement de rapport de vitesse et/ou d'étage à roue de l'engrenage de base (GG) et de l'étage de catégorie (RG) étant disposés de manière coaxiale par rapport à une ligne d'arbres (Z) centrale qui relie le double embrayage (A, B) et l'étage de catégorie (RG),
- la boîte de vitesses à double embrayage (100) mettant à disposition 12 rapports de marche avant en mode prise directe et/ou 13 rapports de marche avant en mode de surmultiplication, et
- l'engrenage de base (GG) possédant un dispositif à arbre intermédiaire (vl, vr ; v),
**caractérisée en ce que**
- le premier élément de changement de rapport (C) de l'engrenage de base (GG) dans la direction du flux de charge est réalisé sous la forme d'un élément de changement de rapport unilatéral et les, de préférence cinq, éléments de changement de rapport (EF, GH, LR, KJ, OU) montés en aval dans la direction du flux de charge sont réalisés sous la forme d'éléments de changement de rapport bilatéraux.

2. Boîte de vitesses à double embrayage (100) selon la revendication 1, **caractérisée en ce que** la ligne d'arbres (Z) centrale comporte un premier arbre d'entrée (a), un deuxième arbre d'entrée (b) et un arbre principal (s), le premier arbre d'entrée (a) étant creux et le deuxième arbre d'entrée (b) s'étendant dans le premier arbre d'entrée (a) au moins dans certaines portions.

3. Boîte de vitesses à double embrayage (100) selon la revendication 2, **caractérisée en ce que** les éléments de changement de rapport comportent deux éléments de changement de rapport (C, EF) au moyen desquels le premier arbre d'entrée (a) peut être amené en liaison solidaire en rotation avec le dispositif à arbre intermédiaire (vl, vr ; v) par le biais de trois étages à roue (SC, SE, SF) au choix.

4. Boîte de vitesses à double embrayage (100) selon l'une des revendications 2 et 3, **caractérisée en ce que** les éléments de changement de rapport comportent un élément de changement de rapport (GH) au moyen duquel le deuxième arbre d'entrée (b) peut être amené en liaison solidaire en rotation avec le dispositif à arbre intermédiaire (vl, vr ; v) par le biais de deux étages à roue (SG, SH) au choix.

5. Boîte de vitesses à double embrayage (100) selon l'une des revendications 2 à 4, **caractérisée en ce que** la ligne d'arbres (Z) centrale comporte un porte-satellites (c) de l'étage de catégorie (RG).

6. Boîte de vitesses à double embrayage (100) selon la revendication 5, **caractérisée en ce que** les éléments de changement de rapport comportent un élément de changement de rapport (KJ) au moyen duquel l'arbre principal (s) peut être amené en liaison solidaire en rotation avec le dispositif à arbre intermédiaire (vl, vr ; v) par le biais d'un étage à roue (SK) ou, au choix, le porte-satellites (c) de l'étage de catégorie (RG) peut être amené en liaison solidaire en rotation avec le dispositif à arbre intermédiaire (vl, vr ; v) par le biais de ce dernier étage à roue (SK).

7. Boîte de vitesses à double embrayage (100) selon l'une des revendications 3, 4 et 6, **caractérisée en ce que** les étages à roue (SC, SE, SF, SG, SH, SR, SK) comportent respectivement une roue fixe sur un arbre intermédiaire (vl, vr ; v) et une roue folle sur la ligne d'arbres (Z) centrale.

8. Boîte de vitesses à double embrayage (100) selon l'une des revendications 5 et 6, **caractérisée en ce que** les éléments de changement de rapport comportent un élément de changement de rapport (OU) au moyen duquel une couronne de train planétaire (r) de l'étage de catégorie (RG) peut être amenée en liaison solidaire en rotation avec le porte-satellites (c) de l'étage de catégorie (RG) ou, au choix, la couronne de train planétaire (r) de l'étage de catégorie (RG) peut être amenée en liaison solidaire en rotation avec un carter de boîte de vitesses.

9. Boîte de vitesses à double embrayage (100) selon l'une des revendications 5, 6 et 8, **caractérisée en ce que** l'arbre principal (s) est relié solidaire en rotation avec un pignon planétaire de l'étage de catégorie (RG) et une prise de force de boîte de vitesse est reliée solidaire en rotation avec le porte-satellites (c) de l'étage de catégorie (RG).

10. Boîte de vitesses à double embrayage (100) selon l'une des revendications 1 à 9, **caractérisée en ce que** le dispositif à arbre intermédiaire possède deux arbres intermédiaires (vl, vr) séparés sur lesquels le flux de puissance peut être ramifié.

11. Boîte de vitesses à double embrayage (100) selon l'une des revendications 1 à 9, **caractérisée en ce que** le dispositif à arbre intermédiaire possède un seul arbre intermédiaire (v).

12. Boîte de vitesses à double embrayage (100) selon l'une des revendications 1 à 11, **caractérisée en ce que** le dispositif à arbre intermédiaire (vl, vr ; v) est exécuté de telle sorte qu'au moins une prise de force auxiliaire (PTO) peut y être raccordée.

13. Boîte de vitesses à double embrayage (100) selon l'une des revendications précédentes, **caractérisée en ce que** l'aptitude au changement de rapport sous charge de l'engrenage de base (GG) et de l'étage de catégorie (RG) est rendue possible par une commutation en chevauchement du double embrayage (A, B) .

14. Véhicule utilitaire, notamment poids-lourd, équipé d'une boîte de vitesses à double embrayage (100) selon l'une des revendications précédentes.
